# EUROPEAN PATENT SPECIFICATION

(11) **EP 0 419 176 B1**
(45) Date of publication and mention of the grant of the patent: **06.12.1995**
(21) Application number: 90310140.0
(22) Date of filing: 17.09.1990
(51) Int. Cl.: A01D 34/70

(54) **Improvements in or relating to grass-boxes for lawnmowers**
Grasfangbehälter für Rasenmäher
Bac récupérateur pour tondeuse à gazon

(30) Priority: 18.09.1989 GB 8921091
(43) Date of publication of application: 27.03.1991
(73) Proprietor: Atco-Qualcast Limited, Stowmarket, Suffolk IP14 1EY (GB)
(72) Inventor: Gray, Philip c/o Roberts Weaver,, London W11 2SA (GB); Williams, Stephen c/o Roberts Weaver,, London W11 2SA (GB)
(74) Representative: BROOKES & MARTIN

(56) References cited:
- EP-A- 0 220 754
- US-A- 4 151 702
- US-A- 4 326 370

## Description

This invention relates to a grass-box arrangement for a lawnmower, particularly but not exclusively a power-driven rotary blade lawnmower.

Rotary blade lawnmowers have been provided with various grass-box arrangements for collecting the mown grass in operation. Such grass-boxes have usually been positioned at the rear of the mower and connected to an outlet from the rotary blade housing. The rotary blade has been arranged so that not only does it cut the grass, but it creates an air flow through its housing and through the opening to carry cut grass into the grass-box. It has been usual to provide a hinged flap which may be moved from a position covering such an opening, when the grass-box is not in position, to a position out of the way when the grass-box is facing communication with the opening. Such a flap also allows the lawnmower to be used without the grass-box, by protecting the user from the flow of cuttings or other objects which would otherwise come out of the opening.

Existing arrangements for such grass-boxes have been cumbersome in use and in particular the arrangements for positioning and attaching the grass-box on the mower have been difficult to use.

It is an object of the present invention to alleviate these problems and to provide a grass-box arrangement which may be readily attached to and removed from a lawnmower for use.

Both US-A-4,151,702 and US-A-4,326,370 disclose an arrangement in which a grass-box is at least partly supported by the handle of a lawnmower, the grass-box being disposed between two upwardly and rearwardly extending parallel members of the handle and being arranged to collect mown grass ejected through a grass outlet opening.

According to the present invention such an arrangement is characterised in that the grass-box is a closed box supported on the top of handle at the front and rear by runner means slidably engageable with the parallel members of the handle such that the grass-box is slidable under its own weight from an inoperative position spaced a substantial distance from the opening to an operative position co-operating with the opening, the runner means being engaged with the parallel handle members by introducing the box between the said members from above and lowering it downwardly therebetween.

Preferably, the grass-box is arranged to co-operate, when in its operative position, with a hinged flap provided to cover the outlet opening when the grass-box is not in place, to hold that flap in an open position clear of the outlet opening.

Preferably, the grass-box has a rigid lid and the runner means from part of the lid. The lid may have suspended therefrom a bag of flexible material. Preferably such flexible material is porous and is preferably a woven fabric material.

Preferably, such rigid lid member is provided with a wire rod frame arranged to support the flexible bag at least to form a mouth of the grass-box to co-operate with the outlet opening of the lawnmower.

Preferably, the lid is provided with a handle by which the grass-box may be lifted and manoeuvred into and out of position from the lawnmower.

In order to promote a fuller understanding of the above and other aspects of the invention, an embodiment will now be described, by way of example only, with reference to the accompanying drawings in which:
Figure 1 is a part perspective view of a lawnmower showing a grass-box embodying the invention,
Figure 2 is a schematic cross-sectional side view of the grass-box of Figure 1 taken on its centre line,
Figure 3 is a scrap cross-sectional view on the line III-III of Figure 2,

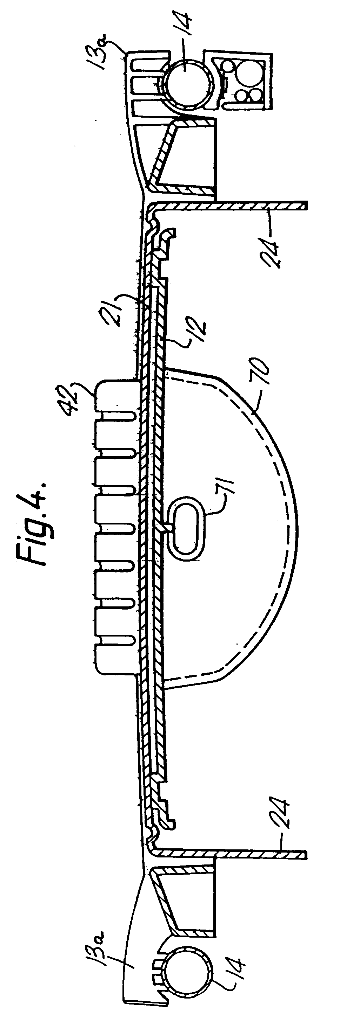

Figure 4 is a schematic cross-section taken on the line IV-IV of Figure 2, and
Figure 5 is a half plan view of the grass-box of Figure 2.

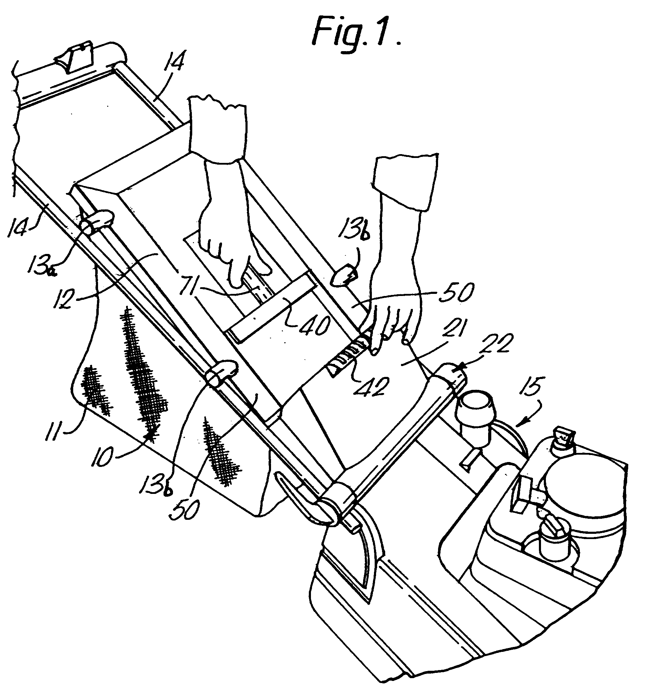

In the embodiment of-the invention shown in the drawings there is provided grass-box indicated generally at 10 comprising a fabric bag 11 carried on a rigid lid member 12. As shown in Figure 1 the lid 12 of the grass-box is provided with front and rear pairs of slide members 13b, 13a arranged to engage and slide on the side rails 14 of the handle structure of a rotary bladed lawnmower indicated generally at 15.

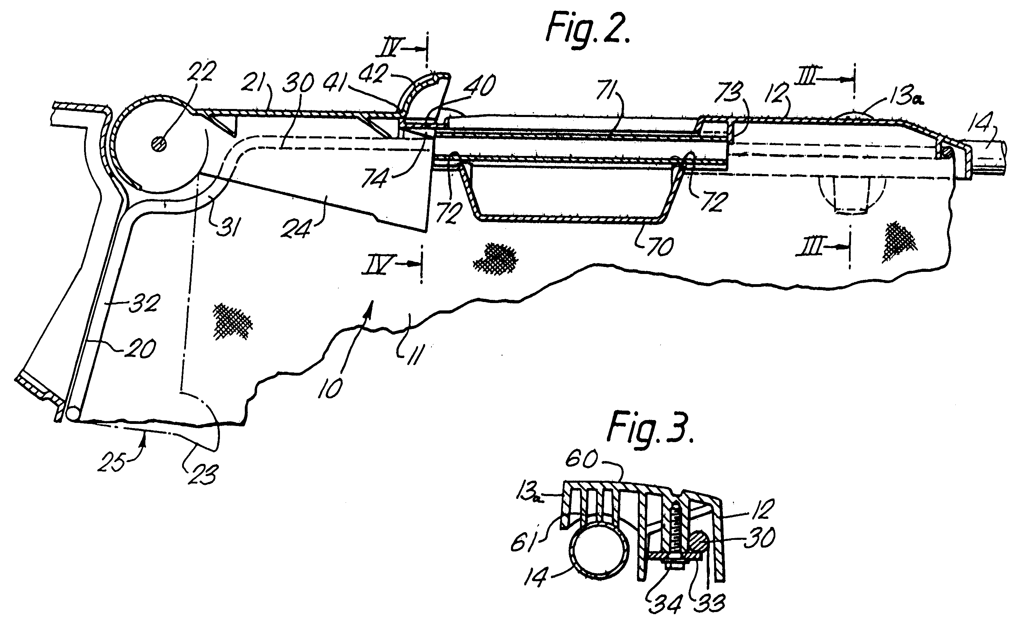

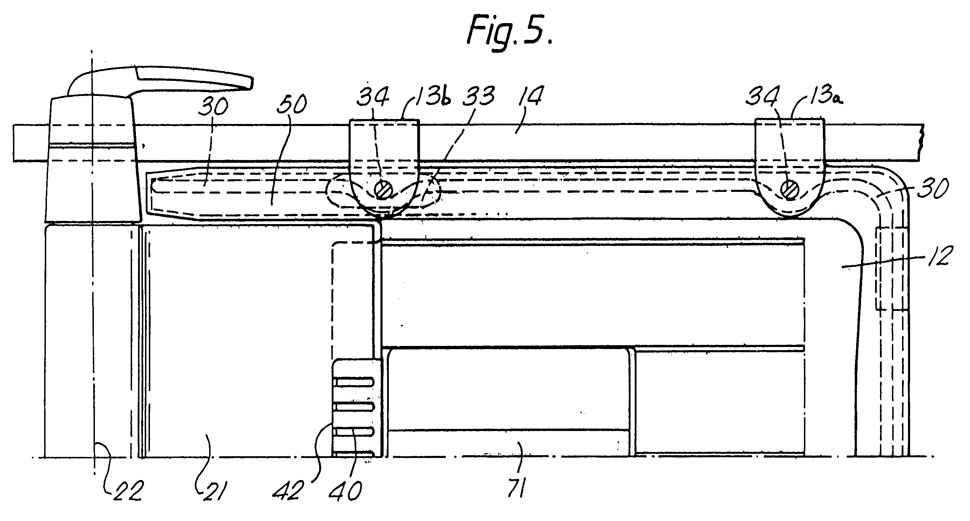

Figures 2 and 5 show a side cross-sectional and a plan view respectively, of the grass-box 10 in its operative position on the lawnmower 15. The outlet opening of the lawnmower is indicated at 20 in Figure 2, and a flap 21 is hinged about an axis 22 on the body of the lawnmower to swing between a position shown in dotted outline at 23 covering the outlet opening, and an open position shown at 21 when the grass-box is in position. The flap 21 has side flanges 24 the edges of which engage the outer periphery of the outlet opening 20 in the closed position, so that even with the flap 21 in the closed position there is an outlet opening across the bottom of the flap indicated at 25. This enables the mower to be used effectively with an airflow out of the blade housing even with the flap in the closed position.

The lid 12 of the grass-box is provided with a wire rod frame 30 which extends generally around the periphery of the lid 12 along the sides and rear edges, and branches away from the lid 12 around the pivot 22 with curved portions on either side, as indicated at 31, to a mouth-shaped portion 32 which corresponds in shape to the outlet opening 20 of the lawnmower. The frame 30 provides a support for the fabric bag 11 and forms in it a mouth to engage the outlet opening of the lawnmower. The fabric of the bag 11 is attached to the frame 30 by the formation of a suitable sleeve at the peripheral edge of the fabric bag. The frame 30 is attached in the lid 12 by means of four clamp plates 33 held in the structure of the lid by means of screws 34 as indicated particularly in Figure 3.

The lid 12 which is preferably formed as a moulding of synthetic plastics material, is provided with a tongue 40 which engages beneath the edge of the flap 21 as at 41, to hold the flap in the open position shown in Figure 2. It can be seen that as soon as the bag is moved away from the outlet opening 20, in a direction to the right of Figure 2, the hinged lid 21 is free to fall down to its closed position A torsion spring arrangement, not shown, is provided to ensure that this happens, and a handle 42 is provided on the flap 21 so that a user may grip it to lift it to the open position on re-positioning the grass-box on the lawnmower.

The lid 12 is as mentioned above formed with two pairs of slide members 13a, 13b which engage slide rails in the form of the handle side members 14, so that the grass-box may be positioned easily, as shown in Figure 1, with the bag portion having already passed between the side members 14, in a position clear of the outlet opening of the lawnmower, and with the hinge flap 21 being lifted up beyond the open position shown in Figure 2. It can be seen that if the grass-box is then released it will slide down the side members 14 from the initial position shown in Figure 1 into the operative position shown in Figures 2 and 5. This enables the grass-box to be put on the lawnmower very easily with a minimum of effort. The hinge flap 21 is then released and will drop down to engage the tongue 40 in its open position as shown in Figure 2. The grass-box lid 12 is provided with side tongues 50 which define between them an open space lying beneath the flap 21 in the operative position. The side tongues 50 also cover the front portions of the frame 30.

Figure 3 shows one of the slide members 13 in a schematic cross-section. The member 13 comprises an extension of the moulding of the lid 12 forming a hollow arm 60 with a series of downward webs 61, the lower edges of which are shaped to engage on the upper surface of the members 14. This provides a relatively frictionless sliding action on the members 14 and allows the grass-box to slide freely under gravity into its operative position.

The lid 12 is formed with a recess 70 and a handle 71 is positioned in that recess so that the user may grip it and lift the grass-box by it conveniently. The handle 71 is formed as a separate extrusion and located in apertures 72 formed in the end walls of the recess 70. The arrangement is such that the handle 71 can be slid into the apertures 72 from the front; and it is retained in position by means of an abutment 73 moulded in the lid 12 on the one hand, and a wedge shaped catch 74 moulded in the lid 12 on the other hand. The catch 74 is sufficiently resilient to deflect out of the way when the handle is being inserted.

Thus it can be seen that the embodiment of the invention described provides a grass-box arrangement which is simple and convenient to use.

## Claims

1. A lawnmower comprising a handle for manoeuvring the mower (15) over the ground and a grass-box (10) disposed between two upwardly and rearwardly extending parallel members (14) of the handle for collecting mown grass ejected through a grass outlet opening (20), characterised in that the grass-box (10) is a closed box supported on top of the handle at the front and rear by runner means slidably engageable with the parallel members (14) of the handle such that the grass-box is slidable under its own weight from an inoperative position spaced a substantial distance from the opening (20) to an operative position co-operating with the opening, the runner means being engaged with the parallel handle members (14) by introducing the grass-box between the said members from above and lowering it downwardly therebetween.

2. A lawnmower according to claim 1 in which the grass-box has a rigid lid (12), and the runner means form part of the lid.

3. A lawnmower according to claim 1 or claim 2 wherein a hinged flap (21) covers the outlet opening (20), and wherein the grass-box (10) co-operates with the flap (21) to retain the flap in an open position clear of the opening (20) only when the grass-box is in its operative position with respect to the opening.

4. A lawnmower according to claim 3 in which the lid (12) of the grass-box is recessed to accommodate the flap (21) in its open position, the flap being retained in its open position by a detent (40) projecting into the recess.

5. A lawnmower according to any one of the claims 2-4 wherein the grass-box (10) further comprises a flexible bag (11) suspended from a wire rod frame (30) secured to the lid (12), the frame (30) forming a mouth (32) of the grass-box adapted to co-operate with the outlet opening (20).

6. A lawnmower according to any one of the claims 2-5 wherein the lid (12) is provided with a handle (71) for lifting and manoeuvring the grass-box (10) into and out of a position in which the runner means (13a, 13b) engage the parallel handle members (14).

## Patentansprüche

1. Rasenmäher, mit einem Griff zur Führung des Rasenmähers (15) über den Boden und mit einem zwischen zwei sich nach oben und hinten erstreckenden parallelen Teilen (14) des Griffes angeordneten Grasfangbehälter (10) zum Aufnehmen des gemähten Grases, das durch eine Gras-Auslaßöffnung (20) ausgeworfen wird,
**dadurch gekennzeichnet,**
daß der Grasfangbehälter (10) ein geschlossener Behälter ist, der vorn und hinten mittels Laufelementen (13a, 13b) auf der Oberseite des Griffes abgestützt ist, die mit den parallelen Teilen (14) des Griffes derart in Verschiebeeingriff bringbar sind, daß der Grasfangbehälter von einer Außerbetriebsstellung, in der er einen wesentlichen Abstand von der Auslaßöffnung (20) hat, unter der Wirkung seines Eigengewichts in eine mit der Auslaßöffnung zusammenwirkende Betriebsstellung verschiebbar ist, wobei die Laufelemente durch Einbringen des Grasfangbehälters von oben und Absenken nach unten zwischen die parallelen Teile (14) des Griffes mit diesen Teilen (14) in Eingriff gelangen.

2. Rasenmäher nach Anspruch 1, bei dem der Grasfangbehälter einen steifen Deckel (12) aufweist und die Laufelemente einen Teil des Deckels bilden.

3. Rasenmäher nach Anspruch 1 oder 2, bei dem eine schwenkbar gehaltene Klappe (21) die Auslaßöffnung (20) abdeckt und bei dem der Grasfangbehälter (10) mit der Klappe (21) so zusammenwirkt, daß er die Klappe (21) nur dann in einer von der Auslaßöffnung (20) weg bewegten Öffnungsstellung hält, wenn sich der Grasfangbehälter in Bezug auf die Auslaßöffnung in seiner Betriebsstellung befindet.

4. Rasenmäher nach Anspruch 3, bei dem der Deckel (12) des Grasfangbehälters zur Aufnahme der Klappe (21) in ihrer Öffnungsstellung ausgespart ist und die Klappe mittels eines Anschlages (40) in ihrer Öffnungsstellung gehalten ist, der in die Aussparung hinein vorsteht.

5. Rasenmäher nach einem der Ansprüche 2 bis 4, bei dem der Grasfangbehälter (10) ferner einen flexiblen Sack (11) aufweist, der an einem am Deckel (12) befestigten Drahtrahmen (30) hängt, welcher eine Maulöffnung (32) des Grasfangbehälters formt, die mit der Auslaßöffnung (20) zusammenwirken kann.

6. Rasenmäher nach einem der Ansprüche 2 bis 5, bei dem der Deckel (12) mit einem Griff (71) zum Anheben und Führen des Grasfangbehälters (10) in eine und aus einer Stellung versehen ist, in der die Laufelemente (13a, 13b) mit den parallelen Teilen (14) des Griffes in Eingriff gelangen.

## Revendications

1. Tondeuse à gazon comportant un manche pour diriger la tondeuse (15) sur le terrain et un bac à herbes (10) situé sur deux éléments parallèles (14) du manche remontant vers l'arrière pour recueillir l'herbe tondue rejetée par l'ouverture d'une sortie d'herbes (20), **caractérisé en ce que,** le bac à herbes (10) est un caisson fermé soutenu sur le manche à l'avant et à l'arrière par des glissières qui engagent avec les éléments parallèles (14) du manche de façon telle que le bac à herbes est en mesure de coulisser sous son propre poids à partir d'une position non-fonctionnelle bien à l'écart de l'ouverture (20) pour rejoindre une position fonctionnelle qui correspond avec l'ouverture, les glissières étant engagées avec les éléments parallèles (14) du manche par l'insertion du bac à herbes depuis le dessus entre lesdits éléments et le déposant entre lesdits éléments.

2. Tondeuse à gazon selon la revendication 1 suivant laquelle le bac à herbes prévoit un couvercle rigide (12) et les coulisses forment un élément intégral du couvercle.

3. Tondeuse à gazon selon la revendication 1 ou la revendication 2 suivant laquelle un volet à charnière (21) recouvre l'ouverture de sortie (20), et suivant laquelle le bac à herbes (10) fonctionne en conjonction avec le volet (21) pour retenir le volet en position ouverte à l'écart de l'ouverture (20) exclusivement lorsque le bac à herbes est en sa position fonctionnelle par rapport à l'ouverture.

4. Tondeuse à gazon selon la revendication 3 suivant laquelle le couvercle (12) du bac à herbes prévoit un congé qui loge le volet (21) en position ouverte, le volet étant retenu en position ouverte par une retenue (40) en saillie dans le congé.

5. Tondeuse à gazon selon l'une ou l'autre des revendications 2-4 suivant lesquelles le bac à herbes (10) comporte un sac flexible (11) suspendu depuis un cadre (30) de fil machine fixé sur le couvercle (12), ledit cadre (30) formant une embouchure (32) du bac à herbes adaptée pour sa fonction en conjonction avec l'ouverture de sortie (20).

6. Tondeuse à gazon selon l'une ou l'autre des revendications 2-5 suivant laquelle le couvercle (12) prévoit une poignée (71) pour relever et manoeuvrer le bac à herbes (10) en position de pose et de dépose suivant laquelle les glissières (13a, 13b) s'engagent avec les éléments parallèles du manche (14).
